# EUROPÄISCHE PATENTSCHRIFT

(11) **EP 3 633 177 B1**
(45) Veröffentlichungstag und Bekanntmachung des Hinweises auf die Patenterteilung: **13.03.2024**
(21) Anmeldenummer: 19198949.0
(22) Anmeldetag: 23.09.2019
(51) Int. Cl.: F02M 21/02, F02D 19/02, F02D 41/00, F02N 19/00, F02D 41/06

(54) **BRENNKRAFTMASCHINE UND VERFAHREN ZUM BETREIBEN EINER BRENNKRAFTMASCHINE**
COMBUSTION ENGINE AND METHOD FOR OPERATING A COMBUSTION ENGINE
MOTEUR À COMBUSTION INTERNE ET PROCÉDÉ DE FONCTIONNEMENT D'UN MOTEUR À COMBUSTION INTERNE

(30) Priorität: 04.10.2018 DE 102018217044
(43) Veröffentlichungstag der Anmeldung: 08.04.2020
(73) Patentinhaber: Volkswagen AG, 38440 Wolfsburg (DE)
(72) Erfinder: Bippes, Michael, 38112 Braunschweig (DE); Weißner, Michael, 38442 Wolfsburg (DE)

(56) Entgegenhaltungen:
- WO-A1-95/30083
- DE-A1-102014 019 419
- DE-A1-102014 208 767
- DE-A1-102015 226 462
- DE-A1-102016 202 612
- US-A- 5 632 250
- US-A1- 2011 214 644

## Beschreibung

Die Erfindung betrifft eine Brennkraftmaschine, mit der unter Verwendung von Kohlenstoff enthaltenden Betriebsmitteln wie Erdgas oder von Wasserstoff mechanische Energie erzeugt wird, wie zum Beispiel ein für den Betrieb mit einem gasförmigen Kraftstoff vorgesehener Verbrennungsmotor, eine Turbine oder ein Strahltriebwerk. Ferner betrifft die Erfindung ein Verfahren zum Betreiben einer derartigen Brennkraftmaschine.

Mit gasförmigen Kraftstoffen betriebene Brennkraftmaschinen können beispielsweise mit Erdgas betriebene Brennkraftmaschinen sein.

Erdgas als Kraftstoff wird in hoch verdichteter Form unter der Bezeichnung CNG (Compressed Natural Gas) eingesetzt. Das Erdgas wird dazu unter einem Druck von ca. 200 bar in einem oder mehreren Kraftstoffdrucktanks gespeichert, um möglichst viel Erdgas in den aus Gewichtsgründen und aus Gründen des begrenzten Bauraums in Kraftfahrzeugen hinsichtlich ihrer Tankvolumina eingeschränkten Kraftstoffdrucktanks speichern zu können. Auf diese Weise sollen akzeptable Reichweiten für die damit angetriebenen Kraftfahrzeuge erreicht werden.

Brennkraftmaschinen, welche ausschließlich mit einem gasförmigen Kraftstoff, wie Erdgas, betrieben werden, weisen meist Probleme beim Kaltstart der Brennkraftmaschine auf. Die Probleme ergeben sich zum einen aus der Speicherung des Erdgases unter hohem Druck von regelmäßig ca. 200 bar in den Kraftstoffdrucktanks und der dadurch erforderlichen Entspannung mittels einer Druckregelvorrichtung auf Werte von ca. 10 bar, die für das Einblasen des Kraftstoffs in beispielsweise ein Saugrohr der Brennkraftmaschine vorgesehen sind. Aufgrund des sogenannten Joule-Thomson-Effekts ist diese Entspannung des Erdgases mit einer erheblichen Temperaturabsenkung verbunden. Dabei kann das Erdgas stromab der Druckregelvorrichtung selbst bei hohen Umgebungstemperaturen Werte von ca. -25 °C aufweisen. Um diese Probleme zu vermeiden, ist es bekannt, die Druckregelvorrichtungen zu beheizen, wozu diese meist in das Kühlsystem der Brennkraftmaschine integriert sind. Eine solche Beheizung ist jedoch erst wirksam, wenn das Kühlmittel des Kühlsystems eine ausreichend hohe Temperatur aufweist, was nach einem Kaltstart der Brennkraftmaschine bei sehr kalten Umgebungstemperaturen erst verzögert gegeben ist.

DE 10 2014 208767 A1 beschreibt eine Brennkraftmaschine mit einem als Gastank ausgestalteten Hauptspeicher zum Bereitstellen eines gasförmigen Kraftstoffs, der mit Injektoren zum Einspritzen des gasförmigen Kraftstoffs in Verbrennungsräume und zum Erzeugen von mechanischer Arbeit verbindbar ist. Die Verbindungsleitungen stehen nach einem Abstellen der Brennkraftmaschine und nach einem Schließen eines Hauptventils weiterhin unter hohem Druck und sind mit dem gasförmigen Kraftstoff gefüllt. Um eine Leckage des gasförmigen Kraftstoffs zu vermeiden, wird der Zwischenspeicher als Puffer geöffnet, um den Druck in den Leitungen zu senken und die Leckage des gasförmigen Kraftstoffs durch die Injektoren zu verhindern. Weiterer Stand der Technik ist aus DE 10 2015 226462 A1 bekannt. Auch die US 2011/214644 A1 offenbart ein Steuerungssystem für gasförmigen Kraftstoff während eines Kaltstarts. Für eine Reduzierung des hohen Drucks wird ein Druckminderer eingesetzt, um das Kaltstartverhalten zu verbessern. Aus der DE 10 2015 226462 A1 ist eine Gasversorgungsvorrichtung einer Brennkraftmaschine bekannt, bei der einer von zwei Gastanks in Abhängigkeit vom Kraftstoffbedarf zur Kraftstoffversorgung zugeschaltet wird, um die Reichweite zu erhöhen und ein zusätzliches Entleeren eines Gastanks zu ermöglichen.

Der Joule-Thomson-Effekt und die Kaltstartproblematik sind aus DE102016202612A1, US5632250A oder WO95030083A1 bereits bekannt.

Der Erfindung liegt daher die Aufgabe zugrunde, eine Brennkraftmaschine sowie ein Verfahren zum Betreiben einer Brennkraftmaschine zur Verfügung zu stellen, bei welchen das Kaltstartverhalten der Brennkraftmaschine mit minimalen technischen Mitteln verbessert werden kann.

Die Lösung der erfindungsgemäßen Aufgabe erfolgt mit den Merkmalen der unabhängigen Ansprüche. Bevorzugte Ausgestaltungen und Weiterbildungen der Erfindung sind in den abhängigen Ansprüchen angegeben.

Erfindungsgemäß ist eine Brennkraftmaschine vorgesehen, mit der unter Verwendung von Kohlenstoff enthaltenden Betriebsmitteln wie Erdgas oder von Wasserstoff mechanische Energie erzeugt wird, wie zum Beispiel ein für den Betrieb mit einem gasförmigen Kraftstoff vorgesehener Verbrennungsmotor, eine Turbine oder ein Strahltriebwerk, welche einen ersten mit der Brennkraftmaschine verbundenen Kraftstoffdrucktank und mindestens einen zweiten mit der Brennkraftmaschine verbundenen Kraftstoffdrucktank aufweist, wobei dem ersten Kraftstoffdrucktank ein erstes Absperrventil zugeordnet ist, wobei dem zweiten Kraftstoffdrucktank ein zweites Absperrventil zugeordnet ist, und wobei das erste Absperrventil getrennt von dem zweiten Absperrventil derart ansteuerbar ist, dass bei einem Kaltstart der Brennkraftmaschine in dem zum Kaltstart und zur Kaltabfahrt genutzten ersten Kraftstoffdrucktank ein möglichst niedriges Druckniveau eingestellt ist, welches sich in seiner Höhe von einem in dem zweiten Kraftstoffdrucktank eingestellten Druckniveau unterscheiden kann, um eine möglichste kleine Druckdifferenz des gasförmigen Kraftstoffs beim Verlassen des ersten Kraftstoffdrucktanks beim Kaltstart der Brennkraftmaschine zu erhalten, um den Joule-Thomson-Effekt in seiner Auswirkung auf Bauteile der Brennkraftmaschine zu vermindern, wobei das möglichst niedrige Druckniveau im ersten Kraftstoffdrucktank während eines Tankvorgangs und/oder während eines Betriebes der Brennkraftmaschine und/oder außerhalb des Betriebes der Brennkraftmaschine einstellbar ist.

Ferner erfolgt die Lösung der erfindungsgemäßen Aufgabe mittels eines Verfahrens zum Betreiben einer Brennkraftmaschine, mit der unter Verwendung von Kohlenstoff enthaltenden Betriebsmitteln wie Erdgas oder von Wasserstoff mechanische Energie erzeugt wird, wie zum Beispiel ein für den Betrieb mit einem gasförmigen Kraftstoff vorgesehener Verbrennungsmotor, welche einen ersten mit der Brennkraftmaschine verbundenen Kraftstoffdrucktank und mindestens einen zweiten mit der Brennkraftmaschine verbundenen Kraftstoffdrucktank aufweist, wobei dem ersten Kraftstoffdrucktank ein erstes Absperrventil zugeordnet ist, wobei dem zweiten Kraftstoffdrucktank ein zweites Absperrventil zugeordnet ist, und wobei das erste Absperrventil getrennt von dem zweiten Absperrventil derart angesteuert wird, dass bei einem Kaltstart der Brennkraftmaschine in dem zum Kaltstart und zur Kaltabfahrt genutzten ersten Kraftstoffdrucktank ein möglichst niedriges Druckniveau eingestellt wird, welches sich in seiner Höhe von einem in dem zweiten Kraftstoffdrucktank eingestellten Druckniveau unterscheiden kann, um eine möglichste kleine Druckdifferenz des gasförmigen Kraftstoffs beim Verlassen des ersten Kraftstoffdrucktanks beim Kaltstart der Brennkraftmaschine zu erhalten, um den Joule-Thomson-Effekt in seiner Auswirkung auf Bauteile der Brennkraftmaschine zu vermindern, wobei die Einstellung des Druckniveaus während eines Tankvorgangs und/oder während eines Betriebes der Brennkraftmaschine und/oder außerhalb des Betriebes der Brennkraftmaschine erfolgt.

Die Erfindung zeichnet sich dadurch aus, dass durch Anpassung eines Druckniveaus in zumindest einem der Kraftstoffdrucktanks eine Druckdifferenz eingestellt werden kann, bei welcher der Joule-Thomson-Effekt in seiner Auswirkung auf die Bauteile vermindert werden kann und damit ein zu starkes Abkühlen des gasförmigen Kraftstoffs beim Verlassen der Kraftstoffdrucktanks beim Kaltstart der Brennkraftmaschine verhindert werden kann. Das Druckniveau im zum Kaltstart und zur Kaltabfahrt genutzten Drucktank sollte möglichst niedrig in dem jeweiligen Kraftstoffdrucktank gehalten werden, um eine möglichste kleine Druckdifferenz zu erhalten und damit ein Abkühlen und dadurch ein Gefrieren des gasförmigen Kraftstoffs vermindern zu können. Sowohl dem ersten Kraftstoffdrucktank als auch dem zweiten Kraftstoffdrucktank ist ein eigenes Absperrventil zugeordnet. Die beiden Absperrventile sind unabhängig voneinander ansteuerbar, wobei durch diese Möglichkeit der unabhängigen Ansteuerbarkeit unterschiedliche Druckniveaus in den Kraftstoffdrucktanks eingestellt werden können. Zumindest in einem der Kraftstoffdrucktanks kann damit das Druckniveau so eingestellt werden, dass bei Austritt des gasförmigen Kraftstoffs aus diesem Kraftstoffdrucktank ein Einfrieren verhindert werden kann und damit ein Kaltstart und eine Kaltabfahrt ohne Probleme durchgeführt werden können. Im laufenden Betrieb der Brennkraftmaschine kann durch die im Betrieb der Brennkraftmaschine erzeugte Wärme dann auch, falls eine Einfrierung im Bereich der kraftstoffführenden Komponenten des anderen Kraftstoffdrucktanks, bei welchem das Druckniveau nicht angepasst wurde, auftritt, ein Abtauen derer erfolgen, so dass nach einem Abtauen dann der Verbrennungsmotor auch über den zweiten bzw. weiteren Kraftstoffdrucktank und dessen verbundenen kraftstoffführenden Komponenten versorgt werden kann. Bei der erfindungsgemäßen Brennkraftmaschine kann damit sichergestellt werden, dass bei einem Kaltstart und der darauf folgenden Kaltabfahrt gasförmiger Kraftstoff zumindest aus einem der Kraftstoffdrucktanks zur Verfügung steht, ohne dass hierfür ein aufwendiges Heizsystem, welches Bauraum innerhalb des Kraftfahrzeuges benötigt und teuer ist, vorgesehen werden muss.

Bevorzugt ist dem ersten Kraftstoffdrucktank ein erster Druckaufnehmer zugeordnet, welcher mit dem ersten Absperrventil verbunden sein kann oder das Drucksignal an eine Steuereinheit zur Betätigung des Absperrventils weiterleitet, und/oder dem zweiten Kraftstoffdrucktank kann ein zweiter Druckaufnehmer zugeordnet sein, welcher mit dem zweiten Absperrventil verbunden sein kann oder das Drucksignal an eine Steuereinheit zur Betätigung des Absperrventils weiterleitet. Damit kann mittels eines ersten Druckaufnehmers ein Druckniveau in dem ersten Kraftstoffdrucktank gemessen werden, wobei der erste Druckaufnehmer das gemessene Druckniveau an das erste Absperrventil übermitteln kann und das erste Absperrventil in Abhängigkeit des gemessenen Druckniveaus angesteuert werden kann, und/oder mittels eines zweiten Druckaufnehmers kann ein Druckniveau in dem zweiten Kraftstoffdrucktank gemessen werden, wobei der zweite Druckaufnehmer das gemessene Druckniveau an das zweite Absperrventil übermitteln kann und das zweite Absperrventil in Abhängigkeit des gemessenen Druckniveaus angesteuert werden kann. Mittels der Druckaufnehmer kann das in dem jeweiligen Kraftstoffdrucktank herrschende Druckniveau kontinuierlich erfasst und gemessen werden, so dass in Abhängigkeit der gemessenen Werte des Druckniveaus eine optimale Einstellung bzw. Nachregelung des Druckniveaus in dem jeweiligen Kraftstoffdrucktank erfolgen kann.

Die Brennkraftmaschine kann auch mehr als zwei Kraftstoffdrucktanks aufweisen. Die Reichweite des die Brennkraftmaschine enthaltenen Kraftfahrzeuges kann dadurch verlängert werden.

Den mehr als zwei Kraftstoffdrucktanks kann dann jeweils ein weiteres Absperrventil zugeordnet sein, welche getrennt ansteuerbar oder welche gemeinsam ansteuerbar und/oder wobei eines oder mehrere der weiteren Absperrventile zusammen mit dem zweiten Absperrventil ansteuerbar sein können. Bevorzugt ist damit jedem Kraftstoffdrucktank der Brennkraftmaschine ein eigenes Absperrventil zugeordnet, wobei dieses Absperrventil allein oder gemeinsam mit einem anderen Absperrventil angesteuert werden kann. Damit kann jedem Absperrventil auch ein Druckaufnehmer zugeordnet sein. Es ist aber auch möglich, dass ein Druckaufnehmer mit zwei oder mehr Absperrventilen verbunden ist.

Beispielsweise ist es auch möglich, dass zumindest einer der mehr als zwei Kraftstoffdrucktanks dem zweiten Absperrventil zugeordnet sein kann.

Bevorzugt ist jedes Absperrventil mit einem Druckaufnehmer verbunden. Dadurch kann eine besonders genaue Anpassung und Einstellung der Absperrventile in Abhängigkeit der gemessenen Druckniveaus in dem jeweiligen Kraftstoffdrucktank erfolgen.

Weiter kann es vorgesehen sein, dass jedem Kraftstoffdrucktank ein Druckaufnehmer zugeordnet ist und/oder dass zwei oder mehr Kraftstoffdrucktanks ein gemeinsamer Druckaufnehmer zugeordnet sein kann.

Die Einstellung des Druckniveaus kann während eines Tankvorgangs und/oder während eines Betriebes der Brennkraftmaschine und/oder außerhalb des Betriebes der Brennkraftmaschine erfolgen. Damit ist eine Einstellung des Druckniveaus zu verschiedenen Zeitpunkten individuell möglich.

Die Einstellung des Druckniveaus kann manuell, auf manuelle oder telemetrische Anforderung oder automatisch erfolgen. Bei einer automatischen Einstellung des Druckniveaus können beispielsweise folgende Daten mit berücksichtigt werden: aktuelles Datum und/oder aktuelle Uhrzeit und/oder geografische Position inklusive der Höhenlage der Brennkraftmaschine bzw. des Kraftfahrzeuges und/oder aktuelle oder zukünftige Wetterdaten und/oder Fahrprofil des Kraftfahrzeuges und/oder Routenplanung des Kraftfahrzeuges und/oder Fahr- und Routenverhalten des Kraftfahrzeuges und/oder Tankstellenabdeckung und/oder Füllstand der Menge des gasförmigen Kraftstoffs in dem jeweiligen Kraftstoffdrucktank. Die Daten können durch Sensoren an dem Kraftfahrzeug selbst erfasst werden und/oder als telemetrisch übermittelte Daten vorliegen. Auf Basis von automatisch ermittelten Werten kann der Vorschlag für eine manuelle oder telemetrische Anforderung erzeugt und übermittelt werden.

Weitere, die Erfindung verbessernde Maßnahmen werden nachstehend anhand der Beschreibung bevorzugter Ausgestaltungen der Erfindung anhand der nachfolgenden Figuren näher dargestellt.

Es zeigen:
- Fig. 1: eine schematische Darstellung einer Brennkraftmaschine gemäß der Erfindung,
- Fig. 2: eine schematische Darstellung einer weiteren Ausgestaltung einer Brennkraftmaschine gemäß der Erfindung,
- Fig. 3: eine schematische Darstellung einer weiteren Ausgestaltung einer Brennkraftmaschine gemäß der Erfindung,
- Fig. 4: eine schematische Darstellung einer weiteren Ausgestaltung einer Brennkraftmaschine gemäß der Erfindung, und
- Fig. 5: eine schematische Darstellung einer weiteren Ausgestaltung einer Brennkraftmaschine gemäß der Erfindung.

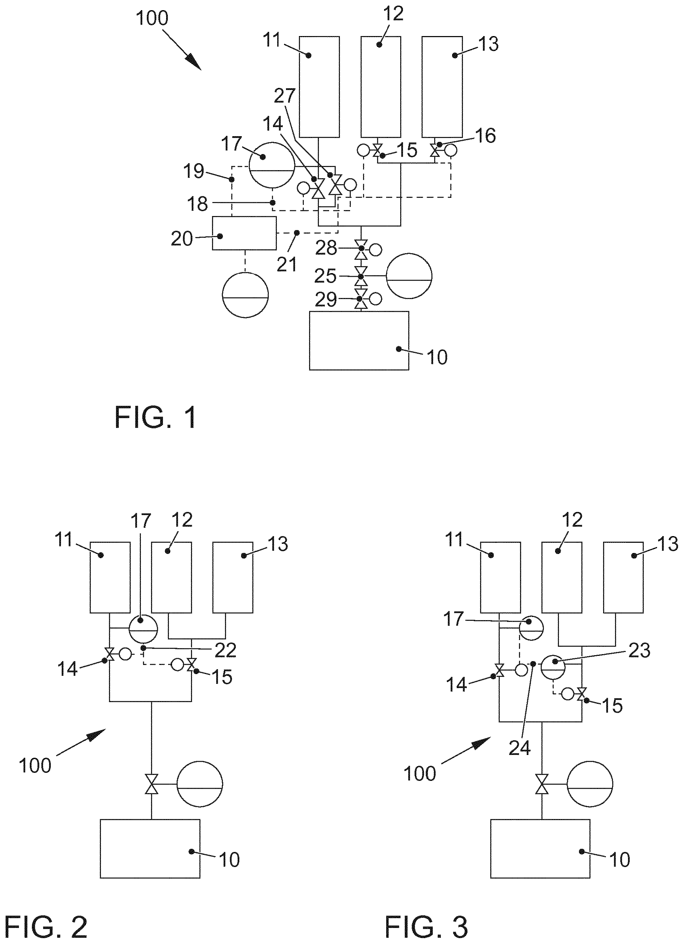

In Fig. 1 ist schematisch eine Brennkraftmaschine 100 eines Kraftfahrzeuges gezeigt.

Die Brennkraftmaschine 100 weist einen Verbrennungsmotor 10 auf, welcher im Betrieb mit einem gasförmigen Kraftstoff, wie beispielsweise Erdgas, angetrieben werden kann. Der gasförmige Kraftstoff ist bei der in Fig. 1 gezeigten Ausgestaltung in drei Kraftstoffdrucktanks 11, 12, 13 unter Druck gespeichert, wobei die Kraftstoffdrucktanks 11, 12, 13 über Leitungen mit dem Verbrennungsmotor 10 verbunden sind. Unmittelbar vor dem Verbrennungsmotor 10 ist ein Druckregelventil 25 angeordnet.

Jedem Kraftstoffdrucktank 11, 12, 13 ist jeweils ein Absperrventil 14, 15, 16 zugeordnet, so dass dem ersten Kraftstoffdrucktank 11 ein erstes Absperrventil 14, dem zweiten Kraftstoffdrucktank 12 ein zweites Absperrventil 15 und dem dritten Kraftstoffdrucktank 13 ein drittes Absperrventil 16 zugeordnet ist. Die Absperrventile 14, 15, 16 sind jeweils an den Leitungen angeordnet, welche die Kraftstoffdrucktanks 11, 12, 13 mit dem Verbrennungsmotor 10 verbinden.

Die Absperrventile 14, 15, 16 sind damit dem Druckregelventil 25, das unmittelbar vor dem Verbrennungsmotor 10 angeordnet ist, vorgelagert. Dadurch kann verhindert werden, dass über einen längeren Zeitraum ein Druck an dem Druckregelventil 25 anliegt. Nach Beendigung einer Fahrt kann dann durch das Schließen der Absperrventile 14, 15, 16 und den darauf einsetzenden Abfluss des Gases eine Entlastung des Druckregelventils 25 erreicht werden.

Bei der in Fig. 1 gezeigten Ausgestaltung ist das erste Absperrventil 14 getrennt von dem zweiten Absperrventil 15 und getrennt von dem dritten Absperrventil 16 steuerbar, so dass bei einem Kaltstart und/oder der Kaltabfahrt der Brennkraftmaschine 100 in dem ersten Kraftstoffdrucktank 11 ein Druckniveau eingestellt werden kann, welches sich in seiner Höhe von dem in dem zweiten und dem dritten Kraftstoffdrucktank 12, 13 eingestellten Druckniveau unterscheidet. Vorzugsweise ist in dem ersten Kraftstoffdrucktank 11 ein niedrigeres Druckniveau eingestellt als in den anderen beiden Kraftstoffdrucktanks 12, 13, so dass bei einem Kaltstart ein Einfrieren zumindest des aus dem ersten Kraftstoffdrucktanks 11 ausströmenden gasförmigen Kraftstoffs vermieden werden kann, so dass Kraftstoff aus dem ersten Kraftstoffdrucktank 11 dem Verbrennungsmotor 10 auch bei einem Kaltstart und/oder der Kaltabfahrt sicher zugeführt werden kann.

Vorzugsweise ist in dem Kraftstoffdrucktank 11 eine Gasmenge druck- und temperaturmäßig derart eingespeichert, dass ein problemloses Starten des Verbrennungsmotors 10 ermöglicht werden kann. Dabei wird vorzugsweise für einen Startvorgang nur so viel Gas der Bevorratung der Kraftstoffdrucktanks 12, 13 eingespeist, dass ein sicherer Startvorgang und/oder eine sichere Kaltabfahrt, vorzugsweise bis der Motorraum und die betroffenen Bauteile warm sind, möglich ist.

Wie in Fig. 1 dargestellt ist, kann es möglich sein, dass dem Absperrventil 14 ein Bypass 27 mit einem weiteren Ventil zugeordnet ist. Das Ventil des Bypass 27 weist vorzugsweise eine geringere Nennweite auf als das eigentliche Absperrventil 14. Durch den verringerten Durchfluss durch das Ventil des Bypass 27 kann eine präzisere Befüllung des zu befüllenden Kraftstoffdrucktanks 11 erfolgen. Dabei sind auch mehr als ein Bypass 27 in Form von Ventilen denkbar. Das Ventil des Bypasses 27 kann auch mit dem gleichen Durchmesser, aber einem schnelleren Öffnungs- und Schließverhalten als das eigentliche Absperrventil 14 ausgeführt werden. Hierdurch kann ebenfalls eine präzise Füllung erfolgen.

Dem ersten Kraftstoffdrucktank 11 ist ein erster Druckaufnehmer 17 zugeordnet, welcher über eine Verbindung 18 mit dem ersten Absperrventil 14 verbunden ist. Der Druckaufnehmer 17 ist wiederum über eine Verbindung 19 mit einem Steuergerät 20 verbunden, wobei das erste Absperrventil 14 über den ersten Druckaufnehmer 17 mit dem Steuergerät 20 verbunden ist. Die Erfindung schließt bevorzugterweise ein, dass alle Druckaufnehmer und alle anzusteuernden Ventile über ein zentrales oder mehrere, ggf. verknüpfte Steuergeräte verbunden sind, und dass die Auswertung und Signalweitergabe an die Ventile über das und/oder die Steuergeräte erfolgt.

Das zweite Absperrventil 15 und das dritte Absperrventil 16 sind über eine gemeinsame Verbindung 21 mit dem Steuergerät 20 verbunden. Da bei der in Fig. 1 gezeigten Ausgestaltung das Druckniveau in dem zweiten und dritten Kraftstoffdrucktank 12, 13 nicht eingestellt werden muss, sind bei den beiden Kraftstoffdrucktanks 12, 13 auch keine separaten Druckaufnehmer vorgesehen. Der Druck in den Tanks 12 und 13 wird jedoch zur Füllstandbestimmung über einen eigenen Druckaufnehmer 24 überwacht.

Mittels des ersten Druckaufnehmers 17 kann ein Druckniveau in dem ersten Kraftstoffdrucktank 11 gemessen werden, wobei der erste Druckaufnehmer 17 über die Verbindung 18 das gemessene Druckniveau an das erste Absperrventil 14 übermittelt und das erste Absperrventil 14 in Abhängigkeit des gemessenen Druckniveaus angesteuert wird, so dass eine optimal angepasste Einstellung des Druckniveaus in dem ersten Kraftstoffdrucktank 11 erfolgen kann. Zusätzlich zu den von dem Druckaufnehmer 17 gemessenen Werten des Druckniveaus können auch noch weitere Daten, wie aktuelles Datum und/oder aktuelle Uhrzeit und/oder geografische Position inklusive der Höhenlage der Brennkraftmaschine bzw. des Kraftfahrzeuges und/oder aktuelle oder zukünftige Wetterdaten und/oder Fahrprofil des Kraftfahrzeuges und/oder Routenplanung des Kraftfahrzeuges und/oder Fahr- und Routenverhalten des Kraftfahrzeuges und/oder Tankstellenabdeckung und/oder Füllstand der Menge des gasförmigen Kraftstoffs in dem jeweiligen Kraftstoffdrucktank bei der Einstellung des Druckniveaus berücksichtigt werden.

Unmittelbar vor dem Druckregelventil 25 ist ein Absperrventil 28 angeordnet. Ferner ist es alternativ oder zusätzlich möglich, dass auch hinter dem Druckregelventil 25 ein Absperrventil 29 angeordnet ist.

Bei der in Fig. 2 gezeigten Ausgestaltung sind ebenfalls drei Kraftstoffdrucktanks 11, 12, 13 vorgesehen. Dem ersten Kraftstoffdrucktank 11 ist wieder ein eigenes Absperrventil 14 zugeordnet. Dem zweiten Kraftstoffdrucktank 12 und dem dritten Kraftstoffdrucktank 13 ist ein gemeinsames, zweites Absperrventil 15 zugeordnet.

Ferner ist dem ersten Kraftstoffdrucktank 11 ein erster Druckaufnehmer 17 zugeordnet. Dieser Druckaufnehmer 17 ist über eine Verbindung 22 sowohl mit dem ersten Absperrventil 14 als auch mit dem zweiten Absperrventil 15 verbunden. Damit kann in Abhängigkeit des in dem ersten Kraftstoffdrucktank 11 herrschenden Druckniveaus, welches von dem Druckaufnehmer 17 gemessen worden ist, sowohl das erste Absperrventil 14 als auch das zweite Absperrventil 15 eingestellt und angesteuert werden.

In Fig. 3 ist eine Ausgestaltung gezeigt, bei welcher ebenfalls drei Kraftstoffdrucktanks 11, 12, 13 vorgesehen sind. Auch hier ist dem ersten Kraftstoffdrucktank 11 ein erstes, eigenes Absperrventil 14 zugeordnet und der zweite Kraftstoffdrucktank 12 und der dritte Kraftstoffdrucktank 13 weisen ein gemeinsames, zweites Absperrventil 15 auf.

Im Unterschied zu der in Fig. 2 gezeigten Ausgestaltung ist bei der in Fig. 3 gezeigten Ausgestaltung nicht nur dem ersten Kraftstoffdrucktank 11 ein Druckaufnehmer 17 zugeordnet, sondern es ist auch dem zweiten und dritten Kraftstoffdrucktank 12, 13 ein gemeinsamer, zweiter Druckaufnehmer 23 zugeordnet.

Der erste Druckaufnehmer 17 misst das Druckniveau in dem ersten Kraftstoffdrucktank 11 und gibt die Daten an das erste Absperrventil 14, um dieses anzusteuern, weiter, und der zweite Druckaufnehmer 23 bestimmt das Druckniveau des zweiten und des dritten Kraftstoffdrucktanks 12, 13 und gibt die gemessenen Daten an das zweite Absperrventil 15, um dieses anzusteuern, weiter. Der zweite Druckaufnehmer 23 ist über eine Verbindung 24 zudem auch mit dem ersten Absperrventil 14 verbunden, so dass Daten des zweiten Druckaufnehmers 23 ebenfalls an das erste Absperrventil 14 übermittelt werden, so dass die Ansteuerung des ersten Absperrventils 14 sowohl durch die von dem ersten als auch von dem zweiten Druckaufnehmer 17, 23 gemessenen Daten erfolgen kann.

Eine weitere, hier nicht gezeigte Ausgestaltung kann auch vorsehen, dass jedem Kraftstoffdrucktank 11, 12, 13 ein Absperrventil 14, 15, 16 und auch jedem Kraftstoffdrucktank 11, 12, 13 ein Druckaufnehmer 17, 23 zugeordnet ist, wobei dann eine Einstellung des Druckniveaus in jedem einzelnen Kraftstoffdrucktank 11, 12, 13 individuell erfolgen kann.

Ferner können auch mehr als drei Kraftstoffdrucktanks 11, 12, 13 vorgesehen sein.

Die Druckaufnehmer 17, 23 können beispielsweise PIRC-Druckaufnehmer sein.

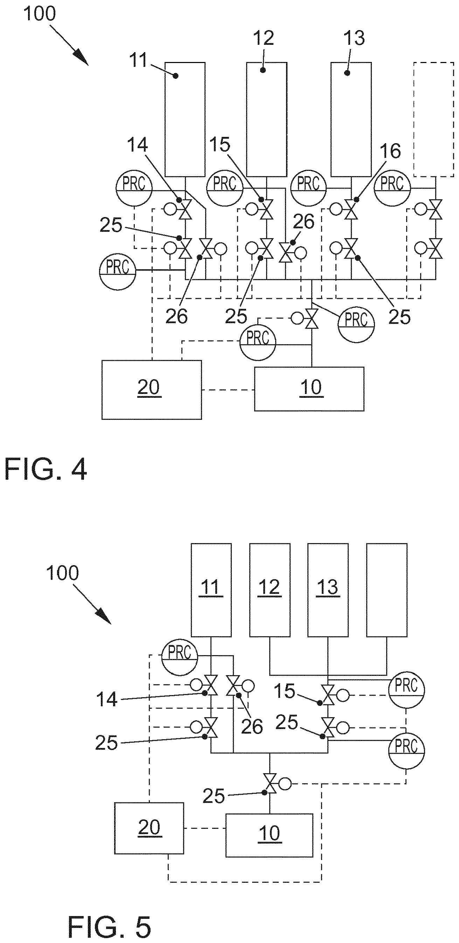

Fig. 4 und 5 zeigen jeweils eine Ausgestaltung, bei welcher jedem Absperrventil 14, 15, 16 ein Druckregelventil 25 nachgeschaltet ist. Damit ist zusätzlich zu dem Druckregelventil 25 vor dem Verbrennungsmotor 10, welches einen Hauptdruckminderer darstellt, mindestens einem der Kraftstoffdrucktanks 11, 12, 13 ein Druckregelventil 25 zugeordnet, welches ebenfalls als Druckminderer ausgebildet ist. Dadurch kann eine Aufteilung der Druckreduzierung auf zumindest zwei Regelstufen erfolgen, so dass die benötigte Enthalpie zur Gasexpansion örtlich verteilt aufgewandt werden muss und so das kältebedingte Einfrieren weiter vermindert werden kann.

Bei dieser Ausgestaltung sind zusätzliche Absperrventile 26 vorgesehen, welche Bypassventile darstellen. Diese kommen bei der Befüllung der druckgeminderten Kraftstofftanks 11, 12, 13 zum Einsatz.

### Bezugszeichenliste

- 100: Brennkraftmaschine
- 10: Verbrennungsmotor
- 11: Kraftstoffdrucktank
- 12: Kraftstoffdrucktank
- 13: Kraftstoffdrucktank
- 14: Absperrventil
- 15: Absperrventil
- 16: Absperrventil
- 17: Druckaufnehmer
- 18: Verbindung
- 19: Verbindung
- 20: Steuergerät
- 21: Verbindung
- 22: Verbindung
- 23: Druckaufnehmer
- 24: Verbindung
- 25: Druckregelventil
- 26: Absperrventil
- 27: Bypass
- 28: Absperrventil
- 29: Absperrventil

## Patentansprüche

1. Brennkraftmaschine (100),
mit der unter Verwendung von Kohlenstoff enthaltenden Betriebsmitteln wie Erdgas oder von Wasserstoff mechanische Energie erzeugt wird, wie zum Beispiel ein für den Betrieb mit einem gasförmigen Kraftstoff vorgesehener Verbrennungsmotor (10), eine Turbine oder ein Strahltriebwerk,
mit einem ersten mit der Brennkraftmaschine (100) verbundenen Kraftstoffdrucktank (11) und mit mindestens einem zweiten mit der Brennkraftmaschine (100) verbundenen Kraftstoffdrucktank (12, 13), wobei dem ersten Kraftstoffdrucktank (11) ein erstes Absperrventil (14) zugeordnet ist,
wobei dem zweiten Kraftstoffdrucktank (12, 13) ein zweites Absperrventil (15, 16) zugeordnet ist, und
**dadurch gekennzeichnet, dass** das erste Absperrventil (14) getrennt von dem zweiten Absperrventil (15, 16) derart ansteuerbar ist, dass bei einem Kaltstart der Brennkraftmaschine (100) in dem zum Kaltstart und zur Kaltabfahrt genutzten ersten Kraftstoffdrucktank (11) ein möglichst niedriges Druckniveau eingestellt ist, welches sich in seiner Höhe von einem in dem zweiten Kraftstoffdrucktank (12, 13) eingestellten Druckniveau unterscheidet, um eine möglichste kleine Druckdifferenz des gasförmigen Kraftstoffs beim Verlassen des ersten Kraftstoffdrucktanks (11) beim Kaltstart der Brennkraftmaschine (100) zu erhalten, um den Joule-Thomson-Effekt in seiner Auswirkung auf Bauteile der Brennkraftmaschine (100) zu vermindern, wobei das möglichst niedrige Druckniveau im ersten Kraftstoffdrucktank (11) während eines Tankvorgangs und/oder während eines Betriebes der Brennkraftmaschine (10) und/oder außerhalb des Betriebes der Brennkraftmaschine (100) einstellbar ist.

2. Brennkraftmaschine (100) nach Anspruch 1, **dadurch gekennzeichnet, dass** dem ersten Kraftstoffdrucktank (11) ein erster Druckaufnehmer (17) zugeordnet ist, welcher mit dem ersten Absperrventil (14) verbunden ist, und/oder dass dem zweiten Kraftstoffdrucktank (12, 13) ein zweiter Druckaufnehmer (23) zugeordnet ist, welcher mit dem zweiten Absperrventil (15, 16) verbunden ist.

3. Brennkraftmaschine (100) nach Anspruch 1 oder 2, **dadurch gekennzeichnet, dass** mehr als zwei Kraftstoffdrucktanks (11, 12, 13) vorgesehen sind.

4. Brennkraftmaschine (100) nach Anspruch 3, **dadurch gekennzeichnet, dass** den mehr als zwei Kraftstoffdrucktanks (11, 12, 13) jeweils ein weiteres Absperrventil (14, 15, 16) zugeordnet ist, welche getrennt ansteuerbar sind oder welche gemeinsam ansteuerbar sind und/oder wobei eines oder mehrere der weiteren Absperrventile (14, 15, 16) zusammen mit dem zweiten Absperrventil (14, 15, 16) ansteuerbar sind.

5. Brennkraftmaschine (100) nach Anspruch 3 oder 4, **dadurch gekennzeichnet, dass** zumindest einer der mehr als zwei Kraftstoffdrucktanks (11, 12, 13) dem zweiten Absperrventil (14, 15, 16) zugeordnet ist.

6. Brennkraftmaschine (100) nach einem der Ansprüche 1 bis 5, **dadurch gekennzeichnet, dass** jedes Absperrventil (14, 15, 16) mit einem Druckaufnehmer (17, 23) verbunden ist.

7. Brennkraftmaschine (100) nach einem der Ansprüche 1 bis 6, **dadurch gekennzeichnet, dass** jedem Kraftstoffdrucktank (11, 12, 13) ein Druckaufnehmer (17, 23) zugeordnet ist und/oder dass zwei oder mehr Kraftstoffdrucktanks (11, 12, 13) ein gemeinsamer Druckaufnehmer (17, 23) zugeordnet ist.

8. Verfahren zum Betreiben einer Brennkraftmaschine (100), mit der unter Verwendung von Kohlenstoff enthaltenden Betriebsmitteln wie Erdgas oder von Wasserstoff mechanische Energie erzeugt wird, wie zum Beispiel ein für den Betrieb mit einem gasförmigen Kraftstoff vorgesehener Verbrennungsmotor (10), eine Turbine oder ein Strahltriebwerk, einen ersten mit der Brennkraftmaschine (100) verbundenen Kraftstoffdrucktank (11) und mindestens einen zweiten mit der Brennkraftmaschine (100) verbundenen Kraftstoffdrucktank (12, 13) aufweist, wobei dem ersten Kraftstoffdrucktank (11) ein erstes Absperrventil (14) zugeordnet ist, wobei dem zweiten Kraftstoffdrucktank (12, 13) ein zweites Absperrventil (15, 16) zugeordnet ist, **dadurch gekennzeichnet, dass** das erste Absperrventil (14) getrennt von dem zweiten Absperrventil (15, 16) derart angesteuert wird, dass bei einem Kaltstart der Brennkraftmaschine (100) in dem zum Kaltstart und zur Kaltabfahrt genutzten ersten Kraftstoffdrucktank (11) ein möglichst niedriges Druckniveau eingestellt wird, welches sich in seiner Höhe von einem in dem zweiten Kraftstoffdrucktank (12, 13) eingestellten Druckniveau unterscheidet, um eine möglichste kleine Druckdifferenz des gasförmigen Kraftstoffs beim Verlassen des ersten Kraftstoffdrucktanks (11) beim Kaltstart der Brennkraftmaschine (100) zu erhalten, um den Joule-Thomson-Effekt in seiner Auswirkung auf Bauteile der Brennkraftmaschine (100) zu vermindern, wobei die Einstellung des Druckniveaus während eines Tankvorgangs und/oder während eines Betriebes der Brennkraftmaschine (100) und/oder außerhalb des Betriebes der Brennkraftmaschine (100) erfolgt.

9. Verfahren nach Anspruch 8, **dadurch gekennzeichnet, dass** mittels eines ersten Druckaufnehmers (17, 23) ein Druckniveau in dem ersten Kraftstoffdrucktank (11) gemessen wird, wobei der erste Druckaufnehmer (17) das gemessene Druckniveau an das erste Absperrventil (14) übermittelt und das erste Absperrventil (14) in Abhängigkeit des gemessenen Druckniveaus angesteuert wird, und/oder dass mittels eines zweiten Druckaufnehmers (23) ein Druckniveau in dem zweiten Kraftstoffdrucktank (12, 13) gemessen wird, wobei der zweite Druckaufnehmer (23) das gemessene Druckniveau an das zweite Absperrventil (15, 16) übermittelt und das zweite Absperrventil (15, 16) in Abhängigkeit des gemessenen Druckniveaus angesteuert wird.

## Claims

1. Combustion engine (100)
by means of which mechanical energy is generated using operating agents containing carbon, such as natural gas or hydrogen, for example an internal combustion engine (10), a turbine or a jet engine which is provided for operation with a gaseous fuel,
comprising a first fuel pressure tank (11) connected to the combustion engine (100) and comprising at least a second fuel pressure tank (12, 13) connected to the combustion engine (100), a first shutoff valve (14) being associated with the first fuel pressure tank (11),
a second shutoff valve (15, 16) being associated with the second fuel pressure tank (12, 13), and
**characterized in that** the first shutoff valve (14) can be controlled separately from the second shutoff valve (15, 16) in such a way that, in the case of a cold start of the combustion engine (100) in the first fuel pressure tank (11) used for cold start and for cold run, the lowest possible pressure level is set which differs in its height from a pressure level set in the second fuel pressure tank (12, 13) in order to obtain the smallest possible pressure difference of the gaseous fuel when leaving the first fuel pressure tank (11) during the cold start of the combustion engine (100) in order to reduce the impact of the Joule-Thomson effect on components of the combustion engine (100), the lowest possible pressure level in the first fuel pressure tank (11) being adjustable during a fueling process and/or during operation of the combustion engine (10) and/or outside of the operation of the combustion engine (100).

2. Combustion engine (100) according to claim 1, **characterized in that** a first pressure sensor (17), which is connected to the first shutoff valve (14), is associated with the first fuel pressure tank (11), **and/or in that** a second pressure sensor (23), which is connected to the second shutoff valve (15, 16), is associated with the second fuel pressure tank (12, 13).

3. Combustion engine (100) according to either claim 1 or claim 2, **characterized in that** more than two fuel pressure tanks (11, 12, 13) are provided.

4. Combustion engine (100) according to claim 3, **characterized in that** in each case a further shutoff valve (14, 15, 16) is associated with the more than two fuel pressure tanks (11, 12, 13), which further shutoff valves can be controlled separately or can be controlled jointly, and/or one or more of the further shutoff valves (14, 15, 16) being able to be controlled together with the second shutoff valve (14, 15, 16).

5. Combustion engine (100) according to either claim 3 or claim 4, **characterized in that** the second shutoff valve (14, 15, 16) is associated with at least one of the more than two fuel pressure tanks (11, 12, 13).

6. Combustion engine (100) according to any of claims 1 to 5, **characterized in that** each shutoff valve (14, 15, 16) is connected to a pressure sensor (17, 23).

7. Combustion engine (100) according to any of claims 1 to 6, **characterized in that** a pressure sensor (17, 23) is associated with each fuel pressure tank (11, 12, 13) **and/or in that** a common pressure sensor (17, 23) is associated with two or more fuel pressure tanks (11, 12, 13).

8. Method for operating a combustion engine (100) by means of which mechanical energy is generated using operating agents containing carbon, such as natural gas or hydrogen, for example an internal combustion engine (10), a turbine or a jet engine, comprising a first fuel pressure tank (11) connected to the combustion engine (100), and at least a second fuel pressure tank (12, 13) connected to the combustion engine (100), a first shutoff valve (14) being associated with the first fuel pressure tank (11), a second shutoff valve (15, 16) being associated with the second fuel pressure tank (12, 13),
**characterized in that** the first shutoff valve (14) is controlled separately from the second shutoff valve (15, 16) in such a way that, in the case of a cold start of the combustion engine (100) in the first fuel pressure tank (11) used for cold start and for cold run, the lowest possible pressure level is set which differs in its height from a pressure level set in the second fuel pressure tank (12, 13) in order to obtain the smallest possible pressure difference of the gaseous fuel when leaving the first fuel pressure tank (11) during the cold start of the combustion engine (100) in order to reduce the impact of the Joule-Thomson effect on components of the combustion engine (100), the pressure level being adjusted during a fueling process and/or during operation of the combustion engine (100) and/or outside of the operation of the combustion engine (100).

9. Method according to claim 8, **characterized in that** a pressure level in the first fuel pressure tank (11) is measured by means of a first pressure sensor (17, 23), the first pressure sensor (17) transmitting the measured pressure level to the first shutoff valve (14) and the first shutoff valve (14) being controlled depending on the measured pressure level, **and/or in that** a pressure level in the second fuel pressure tank (12, 13) is measured by means of a second pressure sensor (23), the second pressure sensor (23) transmitting the measured pressure level to the second shutoff valve (15, 16), and the second shutoff valve (15, 16) being controlled depending on the measured pressure level.

## Revendications

1. Moteur à combustion interne (100),
avec lequel de l'énergie mécanique est produite en utilisant des ressources contenant du carbone, telles que du gaz naturel, ou de l'hydrogène, comme par exemple un moteur thermique (10) prévu pour fonctionner avec un carburant sous forme de gaz, une turbine ou un turboréacteur,
comportant un premier réservoir de carburant sous pression (11) relié au moteur à combustion interne (100) et comportant au moins un second réservoir de carburant sous pression (12, 13) relié au moteur à combustion interne (100), dans lequel une première vanne d'arrêt (14) est associée au premier réservoir de carburant sous pression (11),
dans lequel une seconde vanne d'arrêt (15, 16) est associée au second réservoir de carburant sous pression (12, 13), et
**caractérisé en ce que** la première vanne d'arrêt (14) peut être commandée séparément de la seconde vanne d'arrêt (15, 16) de telle sorte que, lors d'un démarrage à froid du moteur à combustion interne (100), un niveau de pression aussi bas que possible est réglé dans le premier réservoir de carburant sous pression (11) utilisé pour le démarrage à froid et le départ à froid, lequel niveau de pression se distingue par sa hauteur d'un niveau de pression réglé dans le second réservoir de carburant sous pression (12, 13), afin d'obtenir une différence de pression la plus faible possible du carburant sous forme de gaz lorsqu'il quitte le premier réservoir de carburant sous pression (11) lors du démarrage à froid du moteur à combustion interne (100), afin de réduire l'effet Joule-Thomson dans son impact sur les composants du moteur à combustion interne (100), dans lequel le niveau de pression aussi bas que possible dans le premier réservoir de carburant sous pression (11) peut être réglé pendant un processus de remplissage du réservoir et/ou pendant un fonctionnement du moteur à combustion interne (10) et/ou en dehors du fonctionnement du moteur à combustion interne (100).

2. Moteur à combustion interne (100) selon la revendication 1,
**caractérisé en ce qu'**un premier capteur de pression (17) est associé au premier réservoir de carburant sous pression (11), lequel premier capteur de pression est connecté à la première vanne d'arrêt (14), **et/ou en ce qu'**un second capteur de pression (23) est associé au second réservoir de carburant sous pression (12, 13), lequel second capteur de pression est connecté à la seconde vanne d'arrêt (15, 16).

3. Moteur à combustion interne (100) selon la revendication 1 ou 2,
**caractérisé en ce que** plus de deux réservoirs de carburant sous pression (11, 12, 13) sont prévus.

4. Moteur à combustion interne (100) selon la revendication 3,
**caractérisé en ce que** respectivement une autre vanne d'arrêt (14, 15, 16) est associée aux plus de deux réservoirs de carburant sous pression (11, 12, 13), lesquelles peuvent être commandées séparément ou lesquelles peuvent être commandées ensemble et/ou dans lequel une ou plusieurs vannes d'arrêt parmi les autres vannes d'arrêt (14, 15, 16) peuvent être commandées conjointement avec la seconde vanne d'arrêt (14, 15, 16).

5. Moteur à combustion interne (100) selon la revendication 3 ou 4,
**caractérisé en ce qu'**au moins un réservoir de carburant sous pression parmi les plus de deux réservoirs de carburant sous pression (11, 12, 13) est associé à la seconde vanne d'arrêt (14, 15, 16).

6. Moteur à combustion interne (100) selon l'une des revendications 1 à 5,
**caractérisé en ce que** chaque vanne d'arrêt (14, 15, 16) est connectée à un capteur de pression (17, 23).

7. Moteur à combustion interne (100) selon l'une des revendications 1 à 6,
**caractérisé en ce qu'**un capteur de pression (17, 23) est associé à chaque réservoir de carburant sous pression (11, 12, 13) **et/ou en ce qu'un** capteur de pression (17, 23) commun est associé à deux réservoirs de carburant sous pression (11, 12, 13) ou plus.

8. Procédé permettant de faire fonctionner un moteur à combustion interne (100) avec lequel de l'énergie mécanique est produite en utilisant des ressources contenant du carbone, telles que du gaz naturel, ou de l'hydrogène, comme par exemple un moteur thermique (10) prévu pour fonctionner avec un carburant sous forme de gaz, une turbine ou un turboréacteur, présentant un premier réservoir de carburant sous pression (11) relié au moteur à combustion interne (100) et au moins un second réservoir de carburant sous pression (12, 13) relié au moteur à combustion interne (100), dans lequel une première vanne d'arrêt (14) est associée au premier réservoir de carburant sous pression (11), dans lequel une seconde vanne d'arrêt (15, 16) est associée au second réservoir de carburant sous pression (12, 13), **caractérisé en ce que** la première vanne d'arrêt (14) est commandée séparément de la seconde vanne d'arrêt (15, 16) de telle sorte que, lors d'un démarrage à froid du moteur à combustion interne (100), un niveau de pression aussi bas que possible est réglé dans le premier réservoir de carburant sous pression (11) utilisé pour le démarrage à froid et le départ à froid, lequel niveau de pression se distingue par sa hauteur d'un niveau de pression réglé dans le second réservoir de carburant sous pression (12, 13), afin d'obtenir une différence de pression la plus faible possible du carburant sous forme de gaz lorsqu'il quitte le premier réservoir de carburant sous pression (11) lors du démarrage à froid du moteur à combustion interne (100), afin de réduire l'effet Joule-Thomson dans son impact sur les composants du moteur à combustion interne (100), dans lequel le réglage du niveau de pression est effectué pendant un processus de remplissage du réservoir et/ou pendant un fonctionnement du moteur à combustion interne (100) et/ou en dehors du fonctionnement du moteur à combustion interne (100).

9. Procédé selon la revendication 8, **caractérisé en ce qu'**un niveau de pression est mesuré dans le premier réservoir de carburant sous pression (11) au moyen d'un premier capteur de pression (17, 23), dans lequel le premier capteur de pression (17) transmet le niveau de pression mesuré à la première vanne d'arrêt (14) et la première vanne d'arrêt (14) est commandée en fonction du niveau de pression mesuré, **et/ou en ce qu'**un niveau de pression est mesuré dans le second réservoir de carburant sous pression (12, 13) au moyen d'un second capteur de pression (23), dans lequel le second capteur de pression (23) transmet le niveau de pression mesuré à la seconde vanne d'arrêt (15, 16) et la seconde vanne d'arrêt (15, 16) est commandée en fonction du niveau de pression mesuré.
